Europäisches Patentamt

European Patent Office

Office européen des brevets

(11) Publication number: **0 501 467 A1**

# EUROPEAN PATENT APPLICATION

(21) Application number: **92103338.7**

(22) Date of filing: **27.02.92**

(51) Int. Cl.5: **B23Q 3/155**

priority 27.02.91: ITU BO91000031 priority 09.05.91: ITU BO91000089 priority 02.07.91: ITU BO91000135.

(30) Priority: **27.02.91**
**09.05.91**
**02.07.91**

(43) Date of publication of application:
**02.09.92 Bulletin 92/36**

(84) Designated Contracting States:
**AT BE CH DE DK ES FR GB LI**

(71) Applicant: **A P TOOLING SYSTEM S.r.L.**
**Via Francesco Baracca 6**
**I-40033 Casalecchio di Reno, Bologna(IT)**

(72) Inventor: **Zocca, Giovanni**
**Via Francesco Baracca, 6**
**I-40033 Casalecchio di Reno, Bologna(IT)**

(74) Representative: **Gustorf, Gerhard, Dipl.-Ing.**
**Patentanwalt Dipl.-Ing. Gerhard Gustorf**
**Bachstrasse 6 A**
**W-8300 Landshut(DE)**

(54) **Two-faced vice specific for tool-holder conic tangs.**

(57) Two-faced vice special for tool-holder conic tangs (24) in the assembling and disassembling operations of the relative tools, including a bidirectional and interchangeable cradle (19) supporting the tool holder (23), on which this last is retained by at least one movable hold mean (14,15) regulably adjustable and radialy supported with reference to said cradle (19) and inserting in at least one of the radial notches (26,27) provided for the conic tang torsional viceing to the motive head of the machine tool.

FIG. 1

- It is known that in the tool machine the tools are associated in revolving way to the motive heads by using tool holder conic tangs;

- these conic-tangs present a truncate tapered structure, with a self-centering aim, destined to be inserted into some proper places in the motive heads which carry the conic-tangs in rotation radially engaging them in a diametrally opposit notches made on a circumferential flange situated near the major base of the cone.

- The proper tool is assembled to these conic-tangs on the side of the major base and it is axialy engaged by a screw which goes throughth the cone over all its lenght and in the radial way by radial cotters.

- From this, it can be deduced how is necessary to draw out the conic-tangs from the machine motive head and disassemble the proper tool from the tool holder conic tang to procede for the substitution of the tool at the moment one has to change the process of working or for wear and tear of the same.

- This operation is relatively complicated and delicated, also for the operator's safety, for the conic tang-tool group has cutting surfaces on a side and rounding on the other side, which are in every case not well-adapted to be manually retained to act the torsional and axial forces to assemble or to free the tool.

- For this reason it has been conceived some specific tools for the support and the vice of conic tangs in the phases of inserting and disengaging of the same.

- These specific tools, even if they are variably structured and shaped, present the common characteristic of having a conic seat, vertically or horizontally positioned, suitable to recive the conic tang embrassing it and/or encluding it all over its extension or for one or more portions of the same conic seat; this conic seat is fournished near its mouth of some protrusions made to engage the cone circular flange in the radial notches of dragging; in some cases, said specific tools are also provided of some movable means suitable to vice the flange on the tool side to avoid the disengaging from the conic seat.

- These tool structures, which engage all or part of the tool holder conic portion, make in every case necessary the insertion of the conic tang in a way only, considering the tapering of the relative seat; it is also necessary the operator's manipulation on the tool side of the apparatus, with consequent possible accidents on the cutting parts.

- It is alternatively used some tools which are not expressely conceived for the purpose, such as bench-vices, buckles and similars, but these do not allow a solid engage or risck to notch it due to viceing pression.

- Principal object of the present invencion is thus to provide a specific tool for the viceing of the tool holder conic tangs unit during the operations of assembly and removal in themselves of the tool so to avoid the disavantages of the apparutus according to the known art and in every case to allow the viceing without a substantial engagement of the conic portion, so by this last the apparatus can be handled and manipulated during assembling and removal operations of the tool.

- Another object of the present invencion is to achieve the previuos object by a device which strongly links the unit in radial and axial way, whichever be the inseriment direction of the unit in the device.

- Another object of the present invencion is to achieve the previous objects by a device that in any way hamper the operations to do on itself.

- Another object of the present invencion is to achieve the previous objects by a device easly adaptable to conic tangs of different sizes.

- Another object of the present invencion is to achieve the previous objects by a device which can be used with every tool to assembly or remove from the conic tang.

- Another further object of the present invencion is to achieve the previous objects by a simple and efficacious device, which is safe in use and having a cost relatively cheap considering the objects reached by it.

- These and other further objects are all achieved by the two-faced vice specific for tool holder conic tangs in the assembling and disassembling operations of the relative tools, according to the present invention, including a bidirectional and interchangeable cradle supporting the tool holder, on which this last is retained by at least one movable hold mean regulably adjustable and radialy supported with reference to said cradle and inserting in at least one of the radial notches provided for the conic tang torsional viceing to the motive head of the machine tool.

- Further characteristics and advantages of the apparatus according with the present invention will be more evident from the following detailed description of some of its preferred realisation forms which are not exlusive but only prefferred and shown by way of example only in the attached four drawings in which:

- Figure 1 shows a prespective view of the device according to the present invencion, with an associated tool holder conic tang.

- Figure 2 shows a prespective view of a first different embodiment of the device according to the present invention;

- Figures 3 and 4 show the front views of some particulars of the first different embodiment of the device according to figure 2, in two different positions with reference to the conic tang;

- Figure 5 shows a prespective view of a second different embodiment of the device according to the present invention;
- Figure 6 shows a prespective view of a different embodiment of a detail of the device according to the present invention.

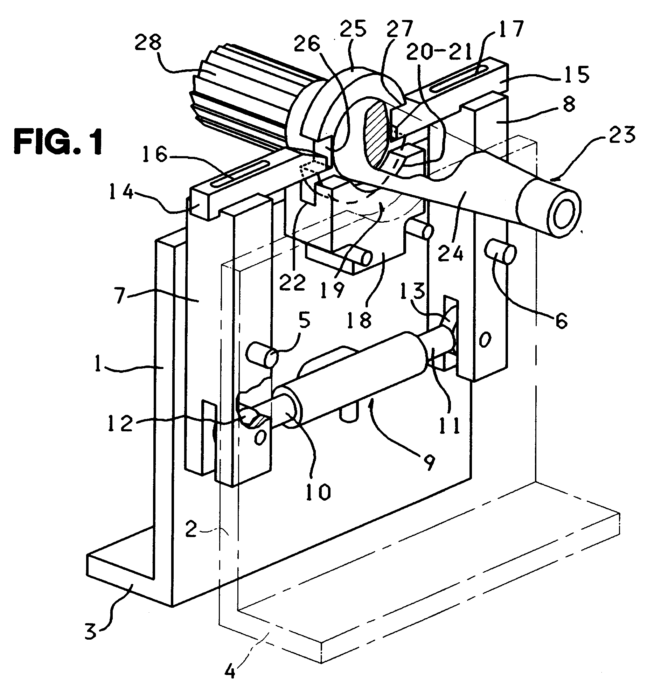

- Referring to these figures, and expecialy to figure 1 with 1 and 2 are respectively shown two vertical and parallel plates, facing one another, fournished in the low part of respective horizontal portions 3 and 4 for their fixing at the working bench.

- Between these two plates 1 and 2, two levers 7 e 8, are pivoted, by the respective pins 5 and 6, which swing one toward the other in the upper part, by means of interposition between the respective low arms of a pneumatic apparatus of the known type, indicated in its whole with 9, fournished of two opposed pistons 10 and 11 respectively met by the needle-rollers 12 and 13 provided in the low part of the levers 7 and 8.

- The same levers 7 and 8 are fournished in the upper part of respective hammer shaped portions 14 and 15 facing one another and regulably adjustable, with reference to their reciprocal distance, for respective tightening of themselves by some screws (not shown) on the levers 7 and 8, through respective holes 16 and 17 provided in themselves.

- In a median position between levers 7 and 8, for the specific case spaced from these to permit their swing, is inserted a cradle shown in its whole with 19 between the plates 1 and 2 by a bayonet clutch 18.

- This cradle 19 is composed by two respective halfcradles 20 and 21 having the same concentric radius arch, and separated by a throat 22.

- With 23 is indicated in its whole a tool holder conic tang of known type, composed by a conic portion 24 and by circular flange 25 and radially provided of opposite notches 26 and 27; finally the tool, a milling cutter in the case, is indicated with 28, associated to the conic tang 23 in the known way.

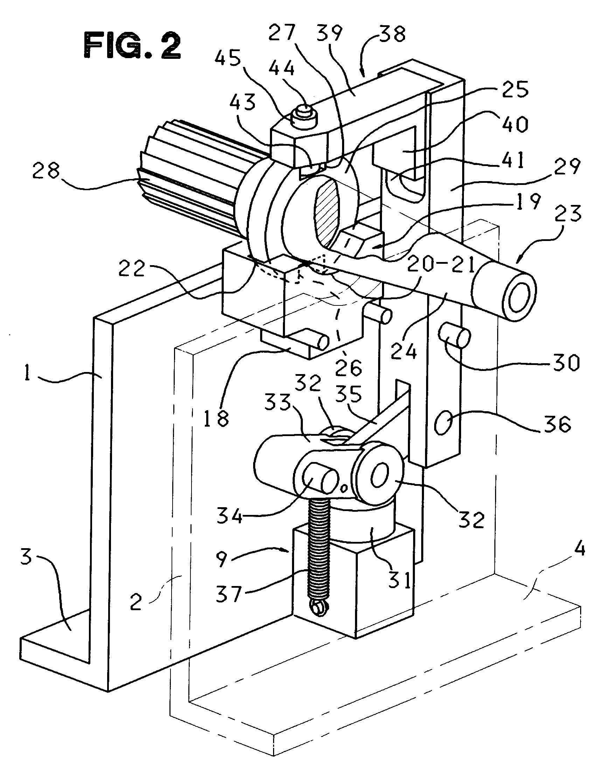

- In the embodiment of figure 2, beetwen the plates 1 and 2, on a side of the cradle 19, is pivoted a lever 29, by a pin 30, suitable to swing superiorly toward this cradle 19; the lever 29 is driven by a pneumatic device indicated with 9, acting by a vertical piston 31 against two needle-rollers 32 pivoted on the end of a shackle-lever 33 engaged on the other end in a pin 34 which links the plates 1 and 2;
- said shackle-lever 33 is joined to a tie-rod 35; this last is associated to one of its ends to the pin of said needle-rollers 32, and on the other end to a pin 36 enferiorly provided into said lever 29;
- to the shackle-lever 33 is also joined an helical spring 37 which is associated on the other end to the body of the pneumatic apparatus 9.

- The lever 29 is superiorly furnished of an arm indicated in its whole with 38, shaped as an "L" and formed by a portion 39 orthogonal to said lever 29 and by a portion 40 parallel to this last and inserted in a vertical throat 41 which superiorly provided the same lever 29.

- Said arm 38 is in its whole verticaly alternatively adjustable by sliding Of its portion 40 in the throat 41 and by screwing up through a vertical hole provided in the lever 29.

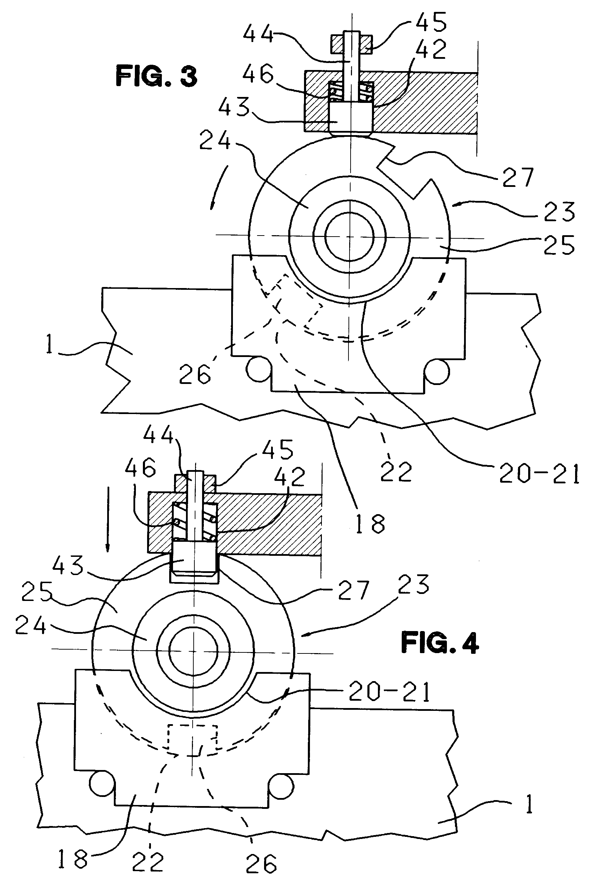

- Near the unangaged end of the orthogonal portion 39 of the arm 38 is enferiorly made a cylindrical seat 42 (see also figures 3 and 4) in which a piston 43 is elasticly slidable till to spring out. Said piston 43 is joined to a pin 44 passing through the portion 39 and costrained by an external stop 45 against the action of an helical spring 46.

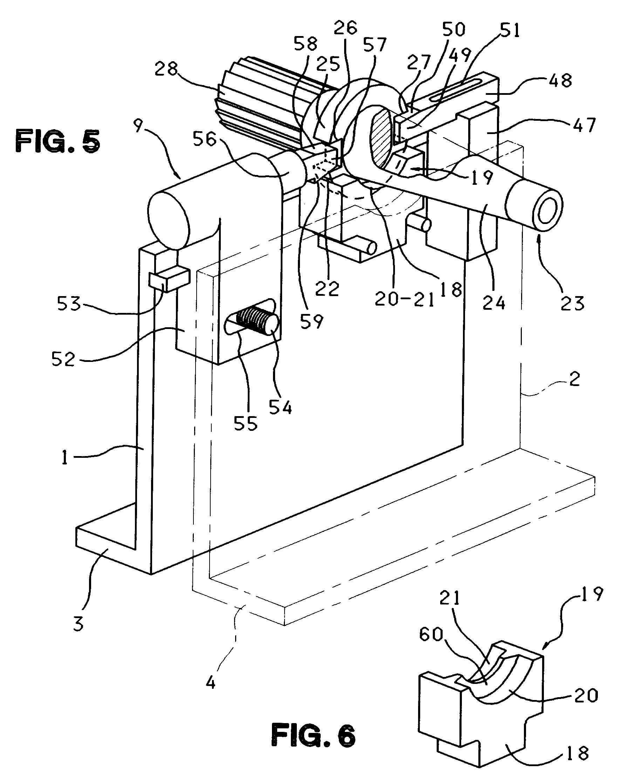

- In the variant of embodiment of figure 5, beetwen the plates 1 and 2, on a side of the cradle 19, is provided a fixed block 47 on which is set an hammer shaped portion 48 having a pane 49 with an upper bevel 50 and projecting toward the cradle 19; the assembling of the hammer portion 48 on the block 47 is adjustable toward the cradle 19 by an hole 51 made in the hammer portion 48 through which is passing a screw not shown.

- Beetwen the same plates 1 and 2, on the other side of the cradle 19, is provided a movable block 52, which is alternativly adjustable by sliding on an horizontal guide 53 assembled to the plate 1, and fixable by screwing up of a screw 54 passing through an horizontal hole 55 made in the same movable block 52.

- The movable block 52 superiorly supports a pneumatic apparatus indicated with 9 in its whole, fournished of an horizontal piston 56 which projects toward the cradle 19 in front of the pane 49 of the hammer portion 48; the piston 56 has an head 57 having upper bevel 58 and of a lower sloped surface 59.

- In figure 6 is shown a different embodiment of the cradle 19 referring to figures 1, 2 and 5, where the half-cradles 20 and 21 are devided by a semi-circular ring 60.

- Having so completed the static description of the apparatus, it is below exposed the dinamic one i.e. the apparatus working (see figure 1):
- the conic tang 23, drawn out in known way from the motive head of a machine tool, is put on the cradle 19, with the possibility of manual took of itself by the operator exclusively by its conic portion 24, inserting the relative circular flange 25 between the half cradles 20 and 21, that is inside the throat 22, resulting costrained in the axial sense;

- it must be noted that the conic tang 23 can, if desired, be placed on the cradle 19 in the opposite sense shown in the picture, too, what above and below being stated.

- In the basical embodiment of figure 1, by the conic tang 23 rotation on the cradle 19, the circunferential notches 26 and 27 of the circular flange 25 are then brought to face respectively the hammer portions 14 and 15 of the levers 7 and 8;

- in consequence of the drive then impressed in known way by the operator to the hydraulic apparatus 9, the opposit pistons 10 and 11 of this are made to push on the enferior arms of the levers 7 and 8, so that these swing one toward the other bringing their respective hammer portions 14 and 15 to introduce in the notches 26 and 27 of the circular flange 25, engaging vertically and radially this last and with it the conic tang 23.

- So the operator can easly accomplish the operations of disassembling and/or assembling of the tool 28 on the conic tang 23, which can then be unangaged by the contrary operation of that above described, where the upper parts of levers 7 and 8 will be then wide open apart by some elastic means not shown.

- In a possible different embodiment one of the levers 7 or 8 can be fixed and only the other movable by a pneumatic apparatus 9 having only one piston 10 or 11.

- Going to the operation of the first different embodiment shown in figure 2 it can be noted that, preferably, the arch of the throat 22 has a light eccentricity in the portion near its vertical axis, so that the circular flange 25 inserted in it touches the bottom-of the throat 22 in only two simmetric points with preference to said vertical axis.

- In consequence of the drive then impressed to the pneumatic apparatus 9, its vertical piston 31 lifts (being shown in this position in figure 2) and pushes on the needle-rollers 32 of the shackle-lever 33, so that this last rises up and push by the tie rod 35 on the enferior portion of the lever 29, that in this way superiorly swing towards the cradle 19 bringing the piston 43 to touch the flange 25 of the conic tang 23 (see figure 3);

- revolving this last on the cradle 19, one of the notches 26 or 27 of the flange 25 is brought in correspondance of said piston 43, which introduce itself there due to its elasticity (see figure 4), engaging verticaly and radialy the flange 25 and by it the conic tang 23.

- In the second embodiment of figure 5, inserting the flange 25 of the conic tang 23 in the throat 22 of the cradle 19, and at the same moment axialy revolving said conic tang 23, the pane 49 of the hammer shaped portion 48 is brought to introduce itself in one notch 26 or 27 of the flange 25; in this embodiment the upper bevel 50 of the pane 49 is provided to permit or to facility the introducing in a wide range of dimensions of the notches 26 or 27.

- In consequence of the drive then impressed to the pneumatic apparatus 9, the horizontal piston 56 of this last is brought to insinuate its head 57 in the other notch 26 or 27 of the flange 25, engaging vertically and radially said flange 25 on the cradle 19 and with it the conic tang 23;

- said engagement is acted due to pression of the lower sloped surface 59 of the head 57 against the low face of the notch 26 or 27; this radial pression is counteracted at the opposit poles by the lower horizontal face of the pane 49 inserted in the opposite notch 26 or 27;

- in this embodiment the upper bevel 58 of the head 57 is provided to permit the introducing in a wide range of dimensions of the notches 26 and 27.

- In another embodiment the viceing can be obtained by pression of the opposite head 57 and the pane 49 on the respective bottom of the notches 26 or 27.

- The apparatus, already adjustable to a dimensional wide rage of conic tangs thank to its structural and functional carachteristics now seen, it can be further and speedly adapted to a more wide range of dimensions of conic tangs by the sostitution of the cradle 19 with another having a different arch size.

- In this ambit of fast adaptement of the apparatus to different sizes of conic tangs 23, it must be considered the alternative embodiment of the cradle 19 shown in figure 6, which make it fastly adaptable also to different conic tangs and in particular to that having a circular groove (not shown) instead of the flange 25 always with the presence of the radial notches 26 or 27; for such a variant shapes of the conic tangs 29, the alternative embodiment of the cradle 19 in figure 6 provides the engagement by inserting of the semi-circular ring 60 in said circular groove (not shown), being stated the already described mechanisms of costraining for the rest.

- Of course, it can be conceived a different collocation of the pneumatic apparatus 9 respecting the horizontal one of figure 5, always radial with reference to the cradle 19 and with adjustable or fixed counterstop everywhere positionated but at the poles of said pneumatic apparatus 9 respecting the cradle 19; it must be noted that the pneumatic apparatus 9 can be provided vertically positionated on the cradle 19; in this case, the piston 56, verticaly hanging on the cradle 19, can have an head 57 shaped as wedge, that is with opposite plans simmetricaly angled with reference to the vertical axis: this for self-centering aims of the notch 26 or 27 which is set under it; in this specific case can be eliminated the counterstop for the engaging of the other notch 26 or 27.

- It is obviously included in the same above described and below claimed concept of solution of the technical problem the employment of mechanical equipollents of the pneumatic apparatus 9, such as hydraulic apparatus, or electromagnetic apparatus or a mechanical apparatus like a screw bolt automatically driven by gear electric motor or manually by crank handle or something like these.

- In this last ambit, it must be underlined another further different embodiment which is the easiest for what concern the economic aspect: in the example shown in figure 5, in sostitution of the pneumatic apparatus 9, a structure is provided quite simmetrically equal or corresponding to the hammer shaped portion 48, projecting itself toward the cradle 19 as well as adjustable in the direction of its projection by fasten with screw through hole on proper support; in this structure the viceing of the conic tang 23 can be obtained by manual regulation of at least one of the hammer shaped pieces, so that both result inserted in the notches 26 or 27.

- As it evidently appears from the detailed description given above of preferred but not exclusive embodiments and also from the mention of further embodiment, this device according to the present invention offers the advantages corresponding to the attainement of the prefixed objects:

- in fact it is provided a specific tool for the viceing of tool holder conic tangs during the operation of assembling and disassembling of the tools on them such not to engage substantially the conic portion, so that the apparatus on which to operate can be handled exclusively by the same conic portion; all this with graet operative flexbility given by the possibility to position the conic tangs alternatively in two opposite senses, with possibility of fast adapting the tool to the dimensions of the conic tangs when it is not suffcent the autoregulation to the dimensions of the conic tang proper of the device, as well as with a solid viceing in every direction and without hindrance for the operations to do on it.

**Claims**

1. Specific vice for tool-holder conic tangs in the assembling and disassembling operations of the tools on them, comprising:
   - an interchangeable work-holder cradle halved into two half cradles with the same arch devided by a seat adapted to recive and engage the circular means equipping the conic tangs;
   - at least one engaging mean radially supported and adjustable with reference to said work holder cradle and fournished of movable portion suitable to enter in at least one of the radial notches provided on said circular means equipping said conic-tangs;
   - supporting means of said work-holder cradle on the same plane of said radial engaging mean.

2. Vice as set forth before, wherein said at least one radial engaging mean entering into the radial notches of the flange of the conic tang engaged in the seat of said cradle is constituted by two hammers respectivly adjustably fixed by screws fixing them on two counterfacing levers of which at last one is swinging toward said cradle.

3. Vice as set forth in claims 1 and 2, wherein the driving means of said two levers are constituted by a pneumatic or hydraulic apparatus placed below said cradle and having two opposit horizontal pistons suitable to open wide apart the enferior arms of the said levers by inerposition of needle-rollers respectively provided in these last.

4. Vice as set forth in claims 1 and 2 wherein the driving means of said only one swinging lever are constituted by a pneumatic or hydraulic apparatus placed below said cradle and having one horizontal piston suitable to push the enferior arm of said only one swinging lever by interposition of needle-rollers.

5. Vice as set forth in claim 1 wherein said at least one radial engaging mean is constitued by a piston vertically elasticly and freely sliding into an arm superiorly adjustably fixed to a lever driven to swing toward the cradle.

6. Vice as set forth in claims 1 and 5, wherein the driving mean of said lever is constituted by a pneumatic or hydraulic apparatus with a vertical piston adapted to lift an articolation associated enferiorly to said lever.

7. Vice as set forth in claim 1, wherein said at least one radial engaging mean is constituted by the piston of a pneumatic or hydraulic apparatus horizontally adjustably supported by an horizontal bar alternatively horizontaly positionable by fixing of it in different points through an hole provided in it.

8. Vice as set forth in claims 1 and 7 wherein said pneumatic apparatus supported horizontaly adjustable can be fixed in alternative position by tightening in different points through at least one horizontal hole provided in its supporting mean.

9. Vice as set forth in claims 1, 7 and 8 wherein said piston has the portion entering in the notch shaped with an upper bevel and a lower sloped surface and wherein said horizontal bar has a portion inserting in the notch enferiorly shaped as an horizontal surface.

10. Vice as as set forth before, wherein said structure devically the half-cradles is constitued by a throat having harched contour suitable to receive and engage the circular flange equipping said conic tang.

11. Vice as set forth before, wherein said throat provided beetwen said two half-cradles has an eccentric arch contour.

12. Vice as set forth before wherein the structure dividing the half-cradles is costitued by an arched ring suitable to insert itself in the circular throat equipping the conic tangs.

13. Vice as set forth in claims 1, 7 and 8, wherein said pneumatic piston is verticaly supported with reference to said cradle and has an head shaped as wedge .

14. Vice as set forth before wherein said interchangeable work holder cradle is inserted in the body of the vice by a bajonet clutch.

15. Vice as set forth before wherein said pneumatic or hydraulic apparatus is sostitued by a mechanical, electromechanical or electromagnetic apparatus.

16. Vice as set forth before in claims 1, 7 and 8, wherein the pneumatic apparatus is sostitued by a bar projecting toward the work holder cradle and alternatively adjustable in the direction of its projection for relative tightening in different points through an hole provided in it.

# FIG. 1

# FIG. 2

**FIG. 3**

**FIG. 4**

**FIG. 5**

**FIG. 6**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | DE-U-8 804 107 (MAHO AG) <br> * page 5, line 28 - page 7, line 2; figure 1 * <br> --- | 1 | B23Q3/155 |
| A | US-A-3 990 140 (RICHARD POLACEK) <br> * column 1, line 47 - line 68; figures 1-10 * <br> --- | 1 | |
| A | GB-A-2 121 760 (LITTON INDUSTRIAL PRODUCTS) <br> * page 1, line 69 - line 76; figures 1-3 * <br> --- | 3,4 | |
| A | EP-A-0 216 309 (KABUSHIKI KAISHA TOSHIBA) <br> --- | | |
| A | DE-U-9 105 593 (SCHEINERT GMBH) <br> ----- | | |

| | |
|---|---|
| | TECHNICAL FIELDS SEARCHED (Int. Cl.5 ) |
| | B23Q <br> B23P |

The present search report has been drawn up for all claims

| Place of search | Date of completion of the search | Examiner |
|---|---|---|
| THE HAGUE | 27 MAY 1992 | RAMBAUD P.M.J. |

EPO FORM 1503 03.82 (P0401)